# EUROPÄISCHE PATENTSCHRIFT

(11) **EP 1 152 931 B1**
(45) Veröffentlichungstag und Bekanntmachung des Hinweises auf die Patenterteilung: **16.11.2005**
(21) Anmeldenummer: 00979391.0
(22) Anmeldetag: 28.09.2000
(51) Int. Cl.: B60S 1/40

(54) **WISCHVORRICHTUNG FÜR SCHEIBEN VON KRAFTFAHRZEUGEN**
WIPER DEVICE FOR MOTOR VEHICLE PANES
DISPOSITIF D'ESSUIE-GLACE POUR VEHICULES

(30) Priorität: 28.10.1999 DE 29918961 U
(43) Veröffentlichungstag der Anmeldung: 14.11.2001
(73) Patentinhaber: ROBERT BOSCH GMBH, 70442 Stuttgart (DE)
(72) Erfinder: DE BLOCK, Peter, B-3545 Halen (BE)
(86) Internationale Anmeldenummer: PCT/DE2000/003389
(87) Internationale Veröffentlichungsnummer: WO 2001/030622

(56) Entgegenhaltungen:
- FR-A- 2 738 201
- GB-A- 2 044 082
- US-A- 4 195 382

## Beschreibung

### Stand der Technik

Die Erfindung geht aus von einer Wischvorrichtung nach der Gattung des Anspruchs 1. Bei einer bekannten Wischvorrichtung dieser Art (DE -A- 23 13 689) hat das zur Wischvorrichtung gehörige Wischblatt einen zu einem Grundkörper der Wischleiste offenen Führungskanal, in dem eine haarnadelförmige Sicherungsfeder zwischen einer Montageposition und einer Verriegelungsposition verschiebbar ist. Diese Sicherungsfeder ist zum Öffnen beziehungsweise zum Verschließen einer in einem wischblattseitigen Kupplungsteil angeordneten Ausnehmung, welche die Lagerausnehmung für den Wischerarm-Gelenkbolzen darstellt. Die Sicherungsfeder ist zum Gummi-Grundkörper vorgespannt, so daß zum Verschieben der Feder die Reibung zwischen Gummi und Feder überwunden werden muß. Einerseits soll die Verschiebbarkeit der Feder für den Benutzer, beispielsweise beim Wischblattausch leichtgängig sein, andererseits muß die Feder aber während des Wischbetriebs zuverlässig die Lagerausnehmung in der Kanalwand verschließen, damit sich das Wischblatt nicht unbeabsichtigt vom Wischerarm lösen kann. Diese beiden einander gegenüberstehenden Forderungen können nicht gleichermaßen zufriedenstellend erfüllt werden.

### Vorteile der Erfindung

Bei der erfindungsgemäßen Wischvorrichtung mit den kennzeichnenden Merkmalen des Anspruchs 1 wird der Schwenkhebel in einer leichtgängigen Lagerstelle zwischen seinen beiden Betriebsstellungen bewegt, so daß die gewünschte Position ohne Kraftaufwand zuverlässig erreicht werden kann.

Um ein unbeabsichtigtes Öffnen des Kanals zu vermeiden ist die Anschlußvorrichtung zur Arretierung des Schwenkhebels in dessen Verriegelungsstellung mit einem Sperrelement versehen.

Wenn der Wischerarm an seinem freien Ende einen U-förmigen Querschnitt hat und jedes der beiden Enden des Gelenkbolzens an einem der beiden U-Schenkel gehalten ist, kann das Kupplungsteil des Wischblatts nach dessen Montage am Wischerarm von dem freien Ende des Wischerarms so übergriffen werden, daß sich das Kupplungsteil zwischen den beiden U-Schenkeln des Wischerarms befindet. Dadurch ergibt sich eine besonders niedrige Bauweise für die Wischvorrichtung.

Eine visuelle Kontrolle der Lagerstelle beziehungsweise der ordnungsgemäßen Lagerung des Gelenkbolzens in seiner Lagerausnehmung wird ermöglicht, wenn die die beiden U-Schenkel verbindende U-Basis sich an dem vom Wischblatt abgewandten Ende der U-Schenkel befindet und mit Abstand von dem Gelenkbolzen endet.

Um den Wischerarm so kurz wie möglich zu halten ist die Schwenkhebel-Lagerstelle am Kupplungsteil zum geführten Ende des Wischerarms hin mit Abstand von der Lagerausnehmung für den Gelenkbolzen angeordnet, wobei die Schwenkachse zum Schwenkhebel zumindest annähernd parallel zur Gelenkachse ausgerichtet ist.

In Ausgestaltung der Erfindung erstreckt sich die U-Basis des freien Endes des Wischerarms über die Schwenkhebel-Lagerstelle hinaus und endet zwischen dieser Lagerstelle und der Gelenkachse. Dadurch wird der Schwenkhebel in seiner Schließstellung blockiert, wenn sich die Wischvorrichtung in Betriebsstellung befindet; das heißt wenn das Wischblatt an der wischenden Scheibe angelegt ist.

Zur Optimierung der Bolzenlagerung im Kupplungsteil ragt der Schwenkhebel in seiner Verriegelungsstellung mit einem Fortsatz in den Montagekanal wobei am Schwenkhebel die Mantelfläche der Lagerausnehmung fortgeführt ist.

Damit der Fortsatz beziehungsweise die an diesem ausgebildete Lagerfläche ordnungsgemäß fixiert ist, ist der Schwenkhebel mit einem Anschlag versehen, der in der Schwenkhebel-Betriebsstellung mit einem Gegenanschlag des Kupplungsteils zusammenwirkt.

Eine weitere Verringerung der Wischvorrichtungs-Bauhöhe wird erreicht, wenn das Kupplungsteil an der von der Scheibe abgewandten Bandfläche eines bandartig langgestreckten, federelastisch Tragelements angeordnet ist, an dessen der Scheibe zugewandten Bandfläche sich die Wischleiste befindet. Eine geringe Bauhöhe der Wischvorrichtung ist insbesondere im Hinblick auf die Abhebebestrebungen des Wischblatts von der Scheibe wichtig, die bei hohen Fahrgeschwindigkeiten auftreten können.

Um eine vorteilhafte Befestigung des Kupplungsteils am Tragelement des wischblatts zu erreichen untergreift das Kupplungsteil die beiden Längs-Seitenkanten des Tragelements zumindest abschnittsweise krallenartig.

Eine besonders gute Wischblattführung bei gleichzeitiger Entlastung des Gelenks zwischen Wischerarm und Wischblatt ergibt sich, wenn in weiterer Ausgestaltung der Erfindung die quer zur Längsrichtung des Wischblatts gemessene Breite des Kupplungsteils auf den Abstand zwischen den beiden U-Schenkeln an den freien Enden des Wischerarms abgestimmt ist.

Vorteile bei der Fertigung der Wischvorrichtung können sich ergeben, wenn sowohl das Kupplungsteil als auch der Schwenkhebel aus einem Kunststoff hergestellt sind.

Die Erfindung betrifft auch eine Anschlußvorrichtung und ein Wischblatt, deren gattungsbildende Merkmale jeweils aus der o.g., DE-A-23 13 689 bekannt sind.

Weitere vorteilhafte Weiterbildungen und Ausgestaltungen der Erfindung sind in der nachfolgenden Beschreibung eines in der dazugehörigen Zeichnung dargestellten Ausführungsbeispiels angegeben.

### Zeichnung

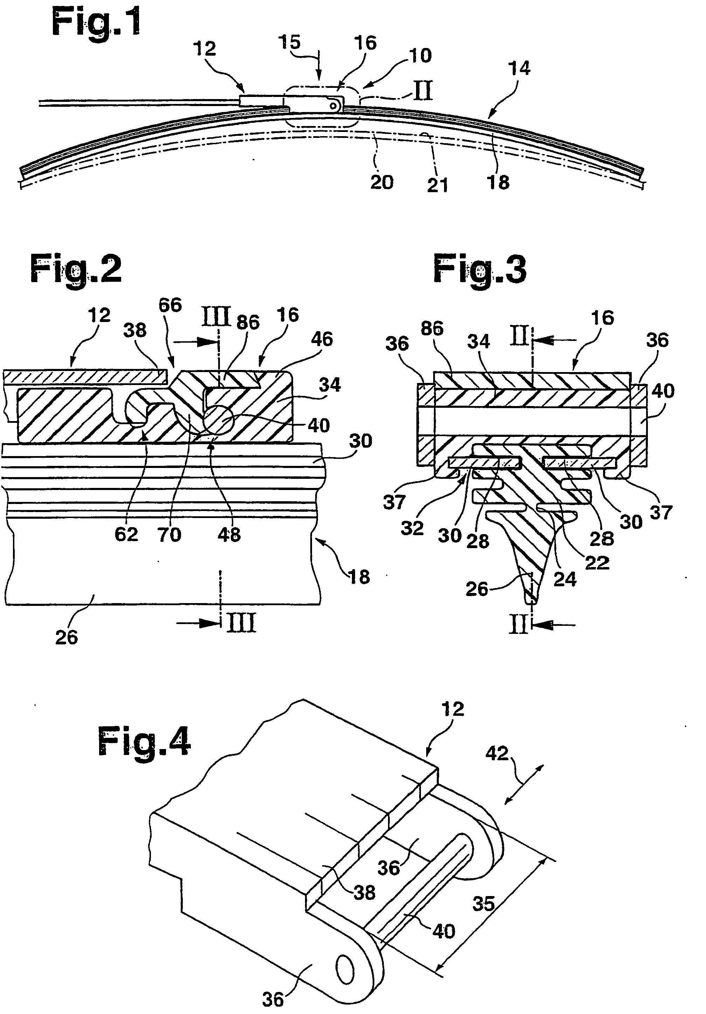

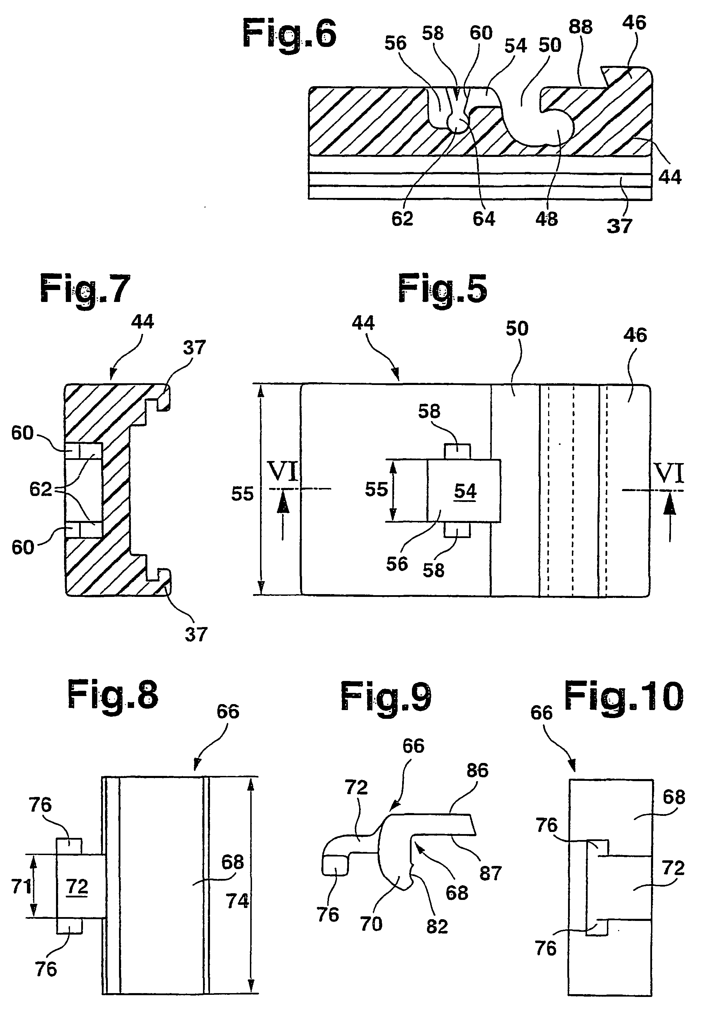

In der Zeichnung zeigen: Figur 1 eine Seitenansicht der erfindungsgemäßen Wischvorrichtung, Figur 2 eine in Figur 1 mit II bezeichnete Einzelheit, vergrößert dargestellt und in Längsrichtung des Wischblatts geschnitten wobei sich der Wischerarm und das Wischblatt zueinander in Betriebsstellung befinden, Figur 3 einen Querschnitt durch die Anordnung gemäß Figur 2 entlang der Linie III-III geschnitten, Figur 4 das freie Ende des zur Wischvorrichtung gehörenden Wischerarms vergrößert und perspektivisch dargestellt, Figur 5 eine Draufsicht auf ein wischblattseitiges, zur Wischvorrichtung gehörendes Kupplungsteil, Figur 6 einen Schnitt entlang der Linie VI-VI durch das Kupplungsteil gemäß Figur 5, Figur 7 einen Schnitt entlang der Linie VII-VII durch das Kupplungsteil gemäß Figur 5, Figur 8 eine Draufsicht auf einen zum Kupplungsteil gehörenden Schwenkhebel, Figur 9 eine Seitenansicht des Schwenkhebels gemäß Figur 8, Figur 10 eine andere Seitenansicht des Schwenkhebels gemäß Figur 8 und die Figuren 11 bis 13 Teil-Schnittdarstellungen des Kupplungsteils entsprechend Figur 2 mit Folge-Montageschritten zwischen dem Wischblatt und dem längsgeschnittenen, freien Ende des Wischerarms.

### Beschreibung des Ausführungsbeispiels

Zu einer in Figur 1 dargestellten Wischvorrichtung 10 gehören ein einendig am Kraftfahrzeug geführter, angetriebener Wischerarm 12, von dem in Figur 1 lediglich sein freies Ende dargestellt ist. Weiter gehört zur Wischvorrichtung 10 ein langgestrecktes Wischblatt 14, das über eine Anschlußvorrichtung 16 mit dem freien Ende des Wischerarms 12 gelenkig und lösbar verbunden ist.

Der Wischerarm 10 und damit auch das Wischerblatt 14 sind in Richtung eines Pfeiles 15 zur zu wischenden Scheibe 20 belastet (Fig. 1), deren zu wischende Oberfläche mit der Bezugszahl 21 versehen ist. Da die Linie 21 die stärkste Krümmung der Scheibe darstellen soll ist klar ersichtlich, daß die Krümmung des nur mit seinen beiden Enden unbelastet an der Scheibe angelegten Wischblatts stärker ist als die maximale Krümmung der Scheibe. Unter dem Anpreßdruck (Pfeil 15) legt sich das Wischblatt 14 mit seiner Wischlippe 26 über seine gesamte Länge an der Scheibenoberfläche 21 an. Dabei baut sich in einem Tragelement 32, für die Wischleiste 26 - das aus mehreren Teilen bestehen oder auch einstückig ausgebildet sein kann - eine Spannung auf, welche für eine ordnungsgemäße Anlage der Wischleiste 18 mit ihrer Wischlippe 26 an der Scheibe sorgt. Weil in aller Regel die sphärisch gekrümmten Scheiben nicht Abschnitte von Kugeloberflächen darstellen, muß sich das Wischblatt 14 gegenüber dem Wischerarm 12 während seiner Wischbewegung ständig der jeweiligen Lage der Scheibenoberfläche anpassen können. Deshalb ist die Anschlußvorrichtung 16 gleichzeitig als Gelenkverbindung ausgebildet, deren Gelenkachse sich im wesentlichen in Wischrichtung erstreckt.

Wie insbesondere die Figuren 2 und 3 zeigen, hat das Wischblatt 14 eine langgestreckte, gummielastische Wischleiste 18, mit der es an der in Figur 1 strichpunktiert dargestellten, zu wischenden Scheibe 20 angelegt werden kann. Die Wischleiste 18 hat eine Kopfleiste 22 mit der über einen Kippsteg 24 eine die eigentliche Wischarbeit übernehmende Wischlippe 26 verbunden ist. Weiter ist aus Figur 3 ersichtlich, daß in der Kopfleiste 22 bezüglich einer auf der Scheibe 20 stehend angeordneten Symetrieebene einander gegenüberliegend zwei Längsnuten 28 angeordnet sind, die zur Aufnahme jeweils einer bandartig langgestreckten Federschiene 30 dienen. Die Federschienen 30 bilden zusammen ein Tragelement 32 für die Wischleiste 18. Die von einander abgewandten äußeren Längskanten der Federschienen 30 ragen zumindest im Mittelabschnitt des Wischblatts aus ihren Längsnuten 28 heraus. Weiter zeigen die Figuren 1 bis 3, daß im Längs-Mittelabschnitt des Wischblatts 14 an der von der Scheibe abgewandten oberen Bandseite des Tragelements 32 ein zur Anschlußvorrichtung 16 gehörendes Kupplungsteil 34 angeordnet ist. Dieses im wesentlichen blockartige Kupplungsteil 34 umgreift mit krallenartigen Ansätzen 36 die beiden freien, äußeren Randbereiche der Federschienen 30 und sichert diese somit in ihren Längsnuten 28. Das Kupplungsteil 34 ist durch geeignete Maßnahmen fest mit den Federschienen 30 bzw. mit dem Tragelement 32 verbunden und somit in Längsrichtung des Wischblatts unverschiebbar. Die besondere Ausbildung des Kupplungsteils 34 in dessen Gesamtheit zeigen die beiden Figuren 2 und 3, von denen Figur 2 das Kupplungsteil im Längsschnitt zeigt, während die an der Scheibe 20 zugewandten untere Bandseite des Tragelements 32 angeordnete Wischleiste 18 samt ihren Federschienen 30 in Ansicht dargestellt sind.

Der Wischerarm 12 hat an seinem freien Ende einen U-förmigen Querschnitt (Figuren 2 bis 4) so daß sich zwei mit Abstand voneinander gegenüberliegende, sich in Längsrichtung des Wischerarms erstreckende U-Schenkel 36 ergeben, welche auf der von der Scheibe abgewandten Oberseite des Wischerarms durch die U-Basis 38 miteinander verbunden sind. An den beiden U-Schenkeln 36 sind nahe dem freien Ende des Wischerarms 12 die beiden Enden eines Gelenkbolzens 40 gehalten. Der Gelenkbolzen 40 erstreckt sich im wesentlichen in Bewegungsrichtung des Wischerarms, die in Figur 4 durch einen Doppelpfeil 42 angedeutet ist.

Das Kupplungsteil 34 wird im Folgenden anhand der Figuren 6 bis 10 beschrieben. Es hat einen wesentlichen blockartigen Körper 44 mit den Krallen 37, der in der schon beschriebenen Weise mit dem Tragelement 32 des Wischblatts 14 fest verbunden ist. An seinem einen, vom Wischerarm 12 abgewandten Ende hat der Körper 44 an seiner Oberseite einen Vorsprung 46. Weiter ist der Körper 44 mit einer Querbohrung 48 versehen, welche über einen Montagekanal 50 zur Oberseite des Körpers 44 hin offen ist. Der Montagekanal 50 verläuft etwas gekrümmt und mündet seitlich in die Querbohrung 48. Beim Ausführungsbeispiel erstrecken sich der Vorsprung 46, die Querbohrung 48 und der Montagekanal 50 über die gesamte Breite 52 des Körpers 44. Auf der bezüglich des Vorsprungs 46 anderen Seite der Querbohrung 48 weist der Körper 44 eine von seiner Oberseite ausgehende Einsenkung 54 auf, die zum Montagekanal 50 hin offen ist (Figur 6). An ihrer vom Montagekanal 50 abgewandten Seite ist die Einsenkung mit einer Vertiefung 56 versehen. In diese Vertiefung 56 münden zwei einander gegenüberliegend angeordnete Aushöhlungen 58, deren Kontur insbesondere aus Figur 6 ersichtlich ist. Die Aushöhlungen 58 sind über einen Einführtrichter 60 zur Oberseite des Körpers 44 offen. Der Einführtrichter 60 verengt sich zu einem bohrungsförmigen Raum 62, so daß im Bereich der Einmündung des Einführtrichters 60 in den Raum 62 eine Engstelle 64 entsteht. Die beiden bohrungsartigen Räume 62 haben eine gemeinsame Bohrungsachse, die zumindest annähernd parallel zur Achse der Querbohrung 48 ausgerichtet ist.

Zum Kupplungsteil 34 gehört ein Schwenkhebel 66, dessen Ausgestaltung anhand der Figuren 8 bis 10 erläutert wird. Der Schwenkhebel 66 hat ein im Querschnitt L-förmiges Basisteil 68 an dessen einen L-Schenkel 70 ein hakenartiger Ansatz 72 angeordnet ist. Die Länge 74 des Basisteils 68 entspricht etwa der Breite 52 des Körpers 44. Die Länge 71 des Ansatzes 72 ist auf die Breite 55 der Einsenkung 54 abgestimmt. An den beiden einander gegenüberliegenden Seiten des Ansatzes 72 ist dieser mit Lagerzapfen 76 versehen, die einen unrunden Querschnitt aufweisen (Figur 9). Der kleinere Durchmesser der beiden Lagerzapfen 76 ist so bemessen, daß diese die Engstelle 64 zwischen den Aushöhlungen 58 und den Einführtrichtern 60 passieren können. Der größere Durchmesser der Lagerzapfen 76 harmoniert mit dem Durchmesser der bohrungsartigen Räume 62 im Körper 44.

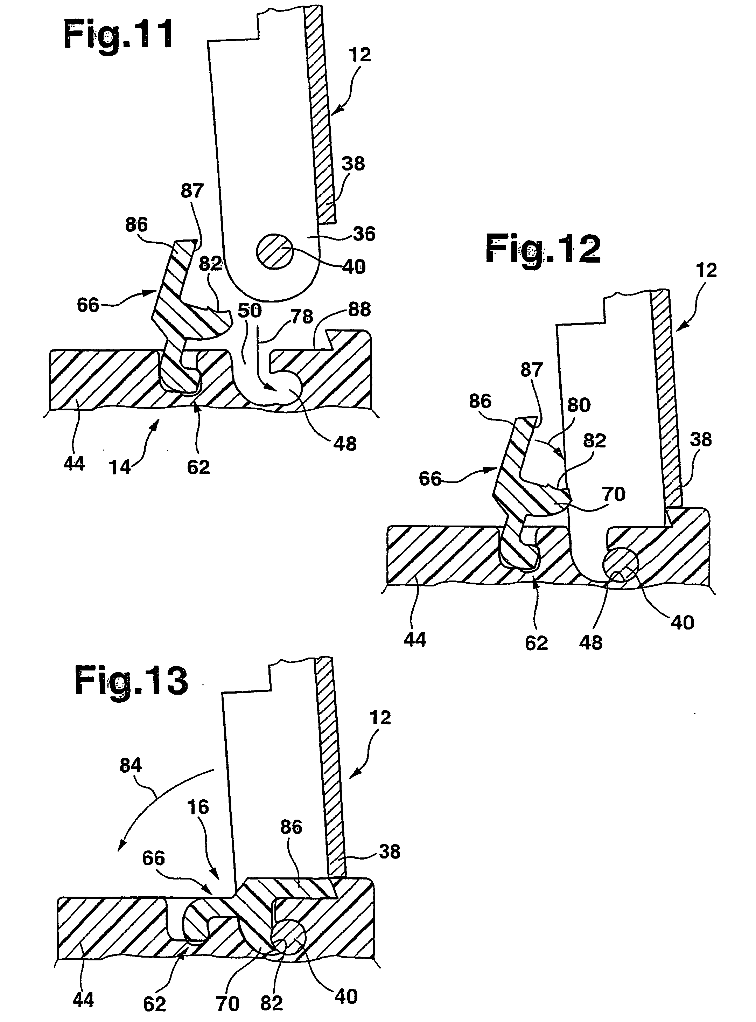

Um das Kupplungsteil 34 zu komplettieren muß der Schwenkhebel 66 mit dem Körper 44 gelenkig verbunden werden. Dazu werden die Lagerzapfen 76 über die Einführtrichter 60 in ihre Räume 62 eingebracht, was nur dann möglich ist, wenn der Schwenkhebel etwa die in Figur 11 dargestellte Position gegenüber dem Körper 44 einnimmt; nur dann nämlich können die im Querschnitt unrunden Lagerzapfen 76 die Engstellen 64 passieren und in die bohrungsartigen Räume 62 gelangen, welche Lagerstellen für den Schwenkhebel 66 bilden. Nach der Komplettierung des Kupplungsteils 34 ist die Verbindung des Wischblatts 14 mit dem Wischerarm 12 möglich.

Dazu müssen sowohl der Wischerarm 12 als auch das Wischblatt 14 zu einander in eine Montageposition gebracht werden, die in Figur 11 dargestellt ist. Durch eine in Figur 11 mit dem Pfeil 78 angedeutete Relativbewegung zwischen Wischerarm 12 und Wischblatt 14 kann der Gelenkbolzen 40 in die Querbohrung 48 des Körpers 44 eingebracht werden die somit eine Lagerausnehmung für den Gelenkbolzen 40 bildet, weil die Achse des Gelenkbolzens 40 und die Achse der Querbohrung 48 nun deckungsgleich sind (Figur 12). Zur Sicherung des Gelenkbolzens 40 in seiner Lagerausnehmung 48 wird der Schwenkhebel 66 in Richtung des Pfeiles 80 in Figur 12 geschwenkt wobei der eine L-Schenkel 70 des Schwenkhebel-Basisteils 68 einen in den Montagekanal 50 eintauchenden Fortsatz bildet (Figur 13). Dieser Fortsatz reicht bis an den Gelenkbolzen 40 heran und ist so ausgebildet, daß er in dessen Bereich eine Fortsetzung der Mantelfläche der Lagerausnehmung 48 darstellt. Dieser Bereich ist an dem L-Schenkel 70 des Basisteils 68 mit der Bezugszahl 82 versehen. Durch diese Ausgestaltung wird der Gelenkbolzen 40 in seiner vorschriftsmäßigen Betriebsposition praktisch vollständig umschlossen, so daß Längs- und Torsionsspiele im Gelenkbolzenlager sehr gut afgenommen werden können. Danach kann die Wischvorrichtung 10 in ihre in Figur 1 dargestellte, vorschriftsmäßige Betriebsposition gebracht werden, wobei eine Relativbewegung zwischen Wischerarm 12 und Wischblatt 14 um die Gelenkachse des Gelenkbolzens 40 stattfindet. Diese Relativbewegung ist in Figur 13 durch einen Pfeil 84 angedeutet. In der nun erreichten Betriebsstellung der Wischvorrichtung 10 ergibt sich nun die in Figur 2 erkennbare Betriebslage der Anschlußvorrichtung 16. Dabei ist es wesentlich, daß sich in dieser Position die U-Basis 38 des Wischerarms 12 über die Schwenkachse des Schwenkhebels 66 zur Lagerausnehmung 48 im Kupplungsteil 34 hinaus erstreckt und erst zwischen dieser Lagerstelle 48 der Gelenkachse bzw. dem Gelenkbolzen 40 endet. Die U-Basis 38 bildet somit ein Sperrelement, welche zur Arretierung des Schwenkhebels 66 in dessen Verriegelungsstellung sorgt. Weiter zeigt Figur 2, daß der andere L-Schenkel 86 des Basisteils 68 beziehungsweise des Schwenkhebels 66 einen Anschlag 87 bildet, der in der Schwenkhebel-Betriebsstellung (Figur 2) mit einem Gegenanschlag des Kupplungsteil-Körpers 44 zusammen wirkt. Der besseren Übersicht wegen ist dieser am anderen L-Schenkel 86 des Schwenkhebels 66 angeordnete Gegenanschlag am Körper 44 in Figur 6 mit der Bezugszahl 88 versehen worden. Damit eine gute Führung zwischen Wischerarm und Wischblatt 14 gegeben ist, ist die quer zur Längsrichtung des Wischblatts gemessene Breite 52 des Körpers 44 beziehungsweise des Kupplungsteils 34 auf den Abstand 35 zwischen den beiden U-Schenkeln 36 an dem freien Ende des Wischerarms 12 abgestimmt.

Eine rationelle Herstellung sowohl des Körpers 44 als auch des Schwenkhebels 66 ist gegeben, wenn diese Teile aus einem Kunststoff hergestellt werden. Dabei kann der Körper aus ein etwas nachgiebigen, elastischen Kunststoff gefertigt sein, damit eine einfache Montage des Wischblatts am Wischerarm möglich ist, wenn der Gelenkbolzen 40 in seine Lagerausnehmung 48 eingebracht wird.

Wie eingehend erläutert worden ist hat die Wischvorrichtung 10 als Sicherungsmittel an dem Kupplungsteil 34 einen bewegbaren Schwenkhebel 66, der zwischen seinen beiden Betriebsstellungen, (Figur 11 Montageposition und Figur 13 Verriegelungsposition) bewegbar ist wobei er in seiner Montageposition den Montagekanal 50 freigibt und in seiner Verriegelungsposition den Montagekanal verschließt.

## Patentansprüche

1. Wischvorrichtung (10) für Scheiben von Kraftfahrzeugen mit einem insbesondere am Kraftfahrzeug geführten, angetriebenen Wischerarm (12), an dessen freien Ende ein mit einer Wischleiste (18) an der Scheibe anlegbares, langgestrecktes Wischblatt (14) über eine Anschlußvorrichtung (16) lösbar verbunden ist, welche armseitig einen Gelenkbolzen (40) hat, dessen Gelenkachse sich im wesentlichen quer zur Längsrichtung des Wischblatts (14) in Arbeitsrichtung (Doppelpfeil 42) der Wischvorrichtung (10) erstreckt und die wischblattseitig in einen Mittelabschnitt des Wischblatts (14) auf dessen von der Scheibe (20) abgewandten Seite ein Kupplungsteil (34) mit einer Lagerausnehmung (48) für den Gelenkbolzen (40) aufweist, welche über einen die Lagerausnehmung zur von der Scheibe (20) abgewandten Seite hin öffnenden Montagekanal (50) in die Ausnehmung (48) einbringbar ist, wobei das Wischblatt (14) mit zwischen einer Montagestellung und einer Verriegelungsstellung bewegbaren Sicherungsmitteln zum Öffnen und Verschließen des Montagekanals (50) versehen ist, **dadurch gekennzeichnet, daß** als Sicherungsmittel an dem Kupplungsteil (34) ein zwischen den beiden Betriebsstellungen bewegbarer Schwenkhebel (66) gelagert ist, der in seiner Montagestellung den Montagekanal (50) frei gibt und in seiner Verriegelungsstellung den Montagekanal (50) verschließt.

2. Wischvorrichtung nach Anspruch 1, **dadurch gekennzeichnet, daß** die Anschlußvorrichtung (16) zur Arretierung des Schwenkhebels (66) in dessen Verriegelungsstellung mit einem Sperrelement (38) versehen ist.

3. Wischvorrichtung nach einem der Ansprüche 1 oder 2, **dadurch gekennzeichnet, daß** der Wischerarm (12) an seinem freien Ende einen U-förmigen Querschnitt hat und daß jedes der beiden Enden des Gelenkbolzens (40) an einem der beiden U-Schenkel (36) gehalten ist.

4. Wischvorrichtung nach Anspruch 3, **dadurch gekennzeichnet, daß** die die beiden U-Schenkel (36) verbindende U-Basis (38) sich an den vom Wischblatt (14) abgewandten Ende der U-Schenkel (36) befindet und mit Abstand von dem Gelenkbolzen (40) endet.

5. Wischvorrichtung nach einem der Ansprüche 1 bis 4, **dadurch gekennzeichnet, daß** die Schwenkhebel-Lagerstelle (62) am Kupplungsteil zum geführten Ende des Wischerarms (12) hin mit Abstand von der Lagerausnehmung (48) für den Gelenkbolzen (40) angeordnet ist und daß die Schwenkachse des Schwenkhebels (66) zumindest annähernd parallel zur Gelenkachse ausgerichtet ist.

6. Wischvorrichtung nach Anspruch 5, **dadurch gekennzeichnet, daß** sich die U-Basis (38) des freien Endes des Wischerarms (12) über die Schwenkhebel-Lagerstelle (62) hinaus erstreckt und zwischen dieser und der Gelenkachse der Lagerausnehmung (48) endet.

7. Wischvorrichtung nach einem der Ansprüche 1 bis 6, **dadurch gekennzeichnet, daß** der Schwenkhebel (66) in seiner Verriegelungsstellung mit einem Fortsatz (70) in den Montagekanal (50) ragt und in dessen Bereich die Mantelfläche der Lagerausnehmung (48) fortführt.

8. Wischvorrichtung nach einem der Ansprüche 1 bis 7, **dadurch gekennzeichnet, daß** der Schwenkhebel (66) mit einem Anschlag (86, 87) versehen ist, der in der Schwenkhebel-Betriebsstellung mit einem Gegenanschlag (88) des Kupplungsteils (34) zusammenwirkt.

9. Wischvorrichtung nach einem der Ansprüche 1 bis 8, **dadurch gekennzeichnet, daß** sich das Kupplungsteil (34) an der von der Scheibe (20) abgewandten Bandfläche eines bandartig langgestreckten, federelastischen Tragelements (32) befindet, an dessen der Scheibe zugewandten Bandfläche die Wischleiste (18) angeordnet ist.

10. Wischvorrichtung nach Anspruch 9, **dadurch gekennzeichnet, daß** das Kupplungsteil (34) die beiden Längs-Seitenkanten des Tragelements (32) zumindest abschnittsweise krallenartig untergreift.

11. Wischvorrichtung nach einem der Ansprüche 3 bis 10, **dadurch gekennzeichnet, daß** die quer zur Längsrichtung des Wischblatts (14) gemessene Breite (52) des Kupplungsteils (34) auf den Abstand (35) zwischen den beiden U-Schenkeln (36) an dem freien Ende des Wischerarms (12) abgestimmt ist.

12. Wischvorrichtung nach einem der Ansprüche 1 bis 11, **dadurch gekennzeichnet, daß** das Kupplungsteil (34) aus einem Kunststoff gefertigt ist.

13. Wischvorrichtung nach einem der Ansprüche 1 bis 12, **dadurch gekennzeichnet, daß** der Schwenkhebel (66) aus einem Kunststoff hergestellt ist.

14. Anschlußvorrichtung für eine Wischvorrichtung insbesondere nach einem der vorhergehenden Ansprüche, mit einem auf einem Wischblatt befestigbaren Kupplungsteil, das eine Lagerausnehmung (48) für einen an einem Wischerarm angeordneten Gelenkbolzen (40) aufweist, welcher über einen die Lagerausnehmung (48) zur von dem Wischblatt abgewandten Seite hin öffnenden Montagekanal (50) in die Lagerausnehmung (48) einbringbar ist und mit einem Sicherungsmittel zum Verschließen des Montagekanals, **dadurch gekennzeichnet, daß** als Sicherungsmittel an dem Kupplungsteil (34) ein zwischen zwei Betriebsstellungen bewegbarer Schwenkhebel (66) gelagert ist, der in einer Montagestellung den Montagekanal (50) freigibt und in einer Verriegelungsstellung den Montagekanal (50) verschließt.

15. Wischblatt für Scheiben von Kraftfahrzeugen mit einer an der Scheibe anlegbaren Wischleiste (18) und mit einem in einem Mittelabschnitt auf der von der Scheibe (20) abgewandten Seite angeordneten Kupplungsteil (34), das eine Lagerausnehmung (48) für einen armseitigen, sich im wesentlichen quer zur Längsrichtung des Wischblatts (14) in Arbeitsrichtung (42) einer Wischvorrichtung (10) erstreckenden Gelenkbolzen (40), und einen die Lagerausnehmung zur von der Scheibe (20) abgewandten Seite hin öffnenden Montagekanal (50) in die Ausnehmung (48) aufweist und das mit zwischen einer Montagestellung und einer Verriegelungsstellung bewegbaren Sicherungsmitteln zum Öffnen und Verschließen des Montagekanals (50) versehen ist, insbesondere für eine Wischvorrichtung nach einem der Ansprüche 1 bis 13, **dadurch gekennzeichnet, dass** als Sicherungsmittel an dem Kupplungsteil (34) ein zwischen den beiden Betriebsstellungen bewegbarer Schwenkhebel (66) gelagert ist, der in seiner Montagestellung den Montagekanal (50) frei gibt und in seiner Verriegelungsstellung den Montagekanal (50) verschließt.

## Claims

1. Wiper device (10) for motor vehicle panes, having a driven wiper arm (12) which is guided in particular on the motor vehicle and to the free end of which an elongate wiper blade (14) which can be placed against the pane by means of a wiper strip (18) is releasably connected via a connecting device (16) which, on the arm side, has a hinge pin (40), the hinge axis of which extends essentially transversely to the longitudinal direction of the wiper blade (14) in the working direction (double arrow 42) of the wiper device (10), and which, on the wiper-blade side, in a central section of the wiper blade (14) on the side thereof which faces away from the pane (20), has a coupling part (34) with a bearing recess (48) for the hinge pin (40) which can be placed into the recess (48) via an installation channel (50) opening the bearing recess towards the side facing away from the pane (20), the wiper blade (14) being provided with securing means which can be moved between an installation position and a locking position and are intended for opening and closing the installation channel (50), **characterized in that**, as securing means, a pivoting lever (66) which can be moved between the two operating positions is mounted on the coupling part (34), which pivoting lever, in its installation position, opens up the installation channel (50) and, in its locking position, closes the installation channel (50).

2. Wiper device according to Claim 1, **characterized in that** the connecting device (16) is provided with a locking element (38) for retaining the pivoting lever (66) in its locking position.

3. Wiper device according to either of Claims 1 or 2, **characterized in that** the wiper arm (12) has a U-shaped cross section at its free end, and **in that** each of the two ends of the hinge pin (40) is held on one of the two U-limbs (36).

4. Wiper device according to Claim 3, **characterized in that** the U-base (38) connecting the two U-limbs (36) is situated at that end of the U-limbs (36) which faces away from the wiper blade (14), and ends at a distance from the hinge pin (40).

5. Wiper device according to one of Claims 1 to 4, **characterized in that** the pivoting-lever bearing point (62) is arranged on the coupling part towards the guided end of the wiper arm (12) at a distance from the bearing recess (48) for the hinge pin (40), and **in that** the pivot axis of the pivoting lever (66) is aligned at least approximately parallel to the hinge axis.

6. Wiper device according to Claim 5, **characterized in that** the U-base (38) of the free end of the wiper arm (12) extends beyond the pivoting-lever bearing point (62) and ends between the latter and the hinge axis of the bearing recess (48).

7. Wiper device according to one of Claims 1 to 6, **characterized in that** the pivoting lever (66), in its locking position, protrudes with an extension (70) into the installation channel (50) and, in the region thereof, continues the circumferential surface of the bearing recess (48).

8. Wiper device according to one of Claims 1 to 7, **characterized in that** the pivoting lever (66) is provided with a stop (86, 87) which, in the pivoting-lever operating position, interacts with a mating stop (88) of the coupling part (34).

9. Wiper device according to one of Claims 1 to 8, **characterized in that** the coupling part (34) is situated on the band surface, which faces away from the pane (20), of a spring-elastic supporting element (32) which is elongate in the manner of a band and on the band surface of which which faces the pane the wiper strip (18) is arranged.

10. Wiper device according to Claim 9, **characterized in that** the coupling part (34) engages at least in some sections under the two longitudinal side edges of the supporting element (32) in the manner of a claw.

11. Wiper device according to one of Claims 3 to 10, **characterized in that** the width (52) of the coupling part (34), which width is measured transversely to the longitudinal direction of the wiper blade (14), is matched to the distance (35) between the two U-limbs (36) at the free end of the wiper arm (12).

12. Wiper device according to one of Claims 1 to 11, **characterized in that** the coupling part (34) is manufactured from a plastic.

13. Wiper device according to one of Claims 1 to 12, **characterized in that** the pivoting lever (66) is produced from a plastic.

14. Connecting device for a wiper device, in particular according to one of the preceding claims, having a coupling part which can be fastened on a wiper blade and has a bearing recess (48) for a hinge pin (40) which is arranged on a wiper arm and can be placed into the bearing recess (48) via an installation channel (50) opening the bearing recess (48) towards the side facing away from the wiper blade, and having a securing means for closing the installation channel, **characterized in that**, as securing means, a pivoting lever (66) which can be moved between two operating positions is mounted on the coupling part (34), which pivoting lever, in an installation position, opens up the installation channel (50) and, in a locking position, closes the installation channel (50).

15. Wiper blade for motor vehicle panes, having a wiper strip (18) which can be placed against the pane and having a coupling part (34) which is arranged in a central section on the side facing away from the pane (20) and has a bearing recess (48) for an arm-side hinge pin (40) extending essentially transversely to the longitudinal direction of the wiper blade (14) in the operating direction (42) of a wiper device (10), and an installation channel (50) into the recess (48), which installation channel opens the bearing recess towards the side facing away from the pane (20), and which coupling part is provided with securing means which can be moved between an installation position and a locking position and are intended for opening and closing the installation channel (50), in particular for a wiper device according to one of Claims 1 to 13, **characterized in that**, as securing means, a pivoting lever (66) which can be moved between the two operating positions is mounted on the coupling part (34), which pivoting lever, in its installation position, opens up the installation channel (50) and, in its locking position, closes the installation channel (50).

## Revendications

1. Dispositif d'essuie-glace (10) de vitre de véhicules automobiles comportant notamment un bras (12) entraîné, guidé, dont une extrémité libre est équipée d'un balai d'essuie-glace (18) muni d'une lame d'essuyage (14) allongée, s'appliquant contre la vitre, le balaie étant relié de manière amovible par un dispositif d'accouplement (16), comportant du côté du bras un goujon d'articulation (40) dont l'axe est dirigé principalement transversalement à la direction longitudinale du balai d'essuie-glace (14), dans la direction active (double flèche 42) du dispositif d'essuie-glace (10), et qui, du côté du balai d'essuie-glace, comporte au niveau de la partie centrale du balai d'essuie-glace (14), sur son côté non tourné vers la vitre (20), une pièce d'accouplement (34) comportant une cavité formant palier (48) pour le goujon d'articulation (40), celui-ci s'introduisant dans la cavité (48) en passant par un canal de montage (50) débouchant dans la cavité formant palier en partant du côté opposé à celui de la vitre (20),
le balai d'essuie-glace (14) comportant des moyens de fixation mobiles entre une position de montage et une position de verrouillage pour ouvrir et fermer le canal de montage (50),
**caractérisé en ce que**
le moyen de fixation est constitué par un levier pivotant (60) monté sur la pièce d'accouplement (34), mobile entre les deux positions d'utilisation, ce levier libérant le canal de montage (50) lorsqu'il est en position de montage et le fermant lorsqu'il est en position de verrouillage.

2. Dispositif d'essuie-glace selon la revendication 1,
**caractérisé en ce que**
le dispositif d'accouplement (16) comporte un élément de verrouillage (38) pour bloquer le levier de pivotement (66) dans sa position de verrouillage.

3. Dispositif d'essuie-glace selon l'une quelconque des revendications 1 ou 2,
**caractérisé en ce que**
l'extrémité libre du bras d'essuie-glace (12) a une section en forme de U et chacune des deux extrémités du goujon d'articulation (40) est tenue à l'une des deux branches en forme de U (36).

4. Dispositif d'essuie-glace selon la revendication 3,
**caractérisé en ce que**
la base (38) en forme de U reliant les deux branches (36) de la forme en U se trouve à l'extrémité de la branche de U (36) opposée au balai d'essuie-glace (14) et se termine à distance du goujon d'articulation (40).

5. Dispositif d'essuie-glace selon l'une quelconque des revendications 1 à 4,
**caractérisé en ce que**
le palier du levier pivotant (62) est prévu au niveau de la pièce d'accouplement vers l'extrémité guidée du bras d'essuie-glace (12), à distance de la cavité de palier (48) pour le goujon d'articulation (40), et l'axe de pivotement du levier pivotant (66) est aligné au moins sensiblement parallèlement à l'axe d'articulation.

6. Dispositif d'essuie-glace selon la revendication 5,
**caractérisé en ce que**
la base en U (38) de l'extrémité libre du bras d'essuie-glace (12) s'étend au-delà du palier (62) du levier pivotant et se termine entre celui-ci et l'axe d'articulation de la cavité de palier (48).

7. Dispositif d'essuie-glace selon l'une quelconque des revendications 1 à 6,
**caractérisé en ce que**
le levier pivotant (66) pénètre en position de verrouillage par son prolongement (70) dans le canal de montage (50) et poursuit dans cette zone la surface enveloppe de la cavité formant palier (48).

8. Dispositif d'essuie-glace selon l'une quelconque des revendications 1 à 7,
**caractérisé en ce que**
le levier pivotant (66) comporte une butée (86, 87) qui coopère en position de fonctionnement du levier pivotant avec une contre-butée (88) de la pièce d'accouplement (34).

9. Dispositif d'essuie-glace selon l'une quelconque des revendications 1 à 8,
**caractérisé en ce que**
la pièce d'accouplement (34) se trouve sur la surface de bande à l'opposé de la vitre (20) d'un élément de support (32), élastique comme un ressort, allongé, en forme de bande, et dont la surface de bande tournée vers la vitre porte la lame d'essuyage (18).

10. Dispositif d'essuie-glace selon la revendication 9,
**caractérisé en ce que**
la pièce d'accouplement (34) vient passer au moins par segment, à la manière de griffes sous les deux arêtes latérales longitudinales de l'élément de support (32).

11. Dispositif d'essuie-glace selon l'une quelconque des revendications 1 à 10,
**caractérisé en ce que**
la largeur (52) de la pièce d'accouplement (34) mesurée transversalement à la direction longitudinale du balai d'essuie-glace (14) correspond à la distance (35) entre les deux branches de U (36) au niveau de l'extrémité libre du bras d'essuie-glace (12).

12. Dispositif d'essuie-glace selon l'une quelconque des revendications 1 à 11,
**caractérisé en ce que**
la pièce d'accouplement (34) est fabriquée en matière plastique.

13. Dispositif d'essuie-glace selon l'une quelconque des revendications 1 à 12,
**caractérisé en ce que**
le levier pivotant (66) est fabriqué en matière plastique.

14. Dispositif d'accouplement d'un dispositif d'essuie-glace notamment selon l'une quelconque des revendications précédentes, comportant une pièce d'accouplement qui se fixe sur un balai d'essuie-glace ayant une cavité formant palier (48) pour recevoir un goujon d'articulation (40) porté par le bras d'essuie-glace, ce goujon se plaçant dans la cavité formant palier (48) à travers un canal de montage (50) s'ouvrant du côté opposé au balai d'essuie-glace ainsi qu'un moyen de fixation pour fermer le canal de montage,
**caractérisé en ce que**
le moyen de fixation monté sur la pièce d'accouplement (34) est un levier pivotant (66) mobile entre deux positions de fonctionnement, ce levier libérant le canal de montage (50) lorsqu'il est en position de montage et fermant ce canal de montage (50) lorsqu'il est en position de verrouillage.

15. Balai d'essuie-glace de véhicules automobiles comportant une lame d'essuyage (18) s'appliquant contre la vitre ainsi qu'une pièce d'accouplement (34) prévue au niveau du segment central, du côté opposé à celui de la vitre (20), cette pièce d'accouplement comportant une cavité formant palier (48) pour le goujon d'articulation (40) prévu du côté du bras, s'étendant principalement transversalement à la direction longitudinale du balai d'essuie-glace (14) dans la direction active (42) d'un dispositif d'essuyage (10), et un canal de montage (50) débouchant dans la cavité (48) en s'ouvrant par un côté opposé à la vitre (20), et des moyens de fixation mobiles entre une position de montage et une position de verrouillage pour ouvrir et fermer le canal de montage (50) notamment pour un dispositif d'essuie-glace selon l'une quelconque des revendications 1 à 13,
**caractérisé en ce que**
le moyen de fixation est un levier pivotant (66) monté sur la pièce d'accouplement (34) et mobile entre les deux positions de fonctionnement, ce levier libérant le canal de montage (50) lorsqu'il est en position de montage et fermant ce canal de montage (50) lorsqu'il est en position de verrouillage.
